Europäisches Patentamt

European Patent Office

Office européen des brevets

(11) Publication number: **0 184 709**
**B1**

(12) **EUROPEAN PATENT SPECIFICATION**

(45) Date of publication of patent specification: **04.04.90**

(21) Application number: **85114943.5**

(22) Date of filing: **26.11.85**

(51) Int. Cl.⁵: **F 02 B 67/04, F 16 H 15/50, F 16 H 59/06**

(54) Accessory drive device in engine.

(30) Priority: **30.11.84 JP 182906/84 u**

(43) Date of publication of application:
**18.06.86 Bulletin 86/25**

(45) Publication of the grant of the patent:
**04.04.90 Bulletin 90/14**

(84) Designated Contracting States:
**DE FR GB**

(56) References cited:
**FR-A-2 499 192**
**JP-A-58 200 838**
**JP-U-5 886 434**
**US-A-2 836 994**
**US-A-3 023 642**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Kaneyuki, Kazutoshi c/o MITSUBISHI DENKI K.K.**
**Himeji Works 840, Chiyodacho Himeji-shi**
**Hyogo (JP)**

(74) Representative: **Eisenführ, Speiser & Strasse**
**Martinistrasse 24**
**D-2800 Bremen 1 (DE)**

Courier Press, Leamington Spa, England.

## Description

The invention relates to an accessory driving device for driving, for instance, an alternator, a cooling water pump, an air-conditioning compressor, utilizing power taken from an output shaft of an engine.

In an engine of an automobile accessories such as an alternator, a cooling water pump, an air-conditioning compressor, an oil pump for hydraulic servo steering or the like are belt-driven by a crank pulley installed at an end of a crank shaft. Since the accesory drive is accompanied with large power loss during the high speed running of the engine, various methods have been proposed to limit the running speed of the accessory by changing the transmission ratio.

For example, Japanese patent application laid-open No. 200838/1983 discloses a reduction drive system comprising a planetary reduction gear and a one-directional clutch, and a direct-coupled drive system comprising a lock-up clutch composed of a hydraulic cylinder is placed between a crank shaft and a crank pulley of an engine, so that the rotational speed of the crank pulley is selectively changed at two stages with respect to the engine rotational speed. But since rapid speed variations occur when changing the transmission ratio, variation of the accessory load applies shocks to the engine, so that the running stability of the vehicle is deteriorated and unpleasantness is brought to the driver. Moreover, there are problems in durability of the planetary reduction gear hence noise is liable to occur. Consequently, this method is not practicable.

On the other hand, for example, Japanese utility model application laid-open No. 86434/1983 discloses a variable pitch pulley to vary the effective pitch diameter, wherein a driving pulley of variable pitch is installed on a crank shaft, and a driven pulley also with variable pitch follows the driving pulley and is integrally connected with an accessory drive pulley, thereby a movable sheave of the driven pulley is controlled by a hydraulic cylinder so as to control the accessory drive speed.

From FR—A—24 99 192 it is known to use a variable transmission for driving accessories. The transmission used, however, has a low efficiency resulting in high power dissipation. In a first speed range the output speed increases proportionally to the input speed, whereas in a second range the output speed is substantially constant, and in a third range the output speed increases again. The constant speed in the second range is due to a frictional transmission or braking in a planetary gear which would mean development of heat in this range.

From US—A—2 836 994 a planetary cone friction transmission system having an infinitely variable transmission ratio is known, which transmission system is intended as a main drive, i.e. for driving a load at infinitely variable speeds from an engine having substantially constant speed. The known transmission system comprises support means; a driven member suppored for rotation about its axis by said support means; a deformable friction ring coaxial with said driven member and operatively connected to the latter for transmitting a drive thereto when said friction ring rotates about its axis; a plurality of conical planetary rollers distributed about the axis of said driven member, and being surrounded by and engaging said friction ring; a plurality of bearing means respectively supporting said planetary rollers for respective free rotation about their axes and for respective free movement along their axes under the action of centrifugal force so that when said planetary rollers rotate about the axis of said driven member they will press against said friction ring due to the centrifugal force acting on said rollers; a drive shaft coaxial with said driven shaft and also supported for rotation about its axis by said support means; and turning means cooperating with said drive shaft and said rollers for turning the latter respectively about their axes and simultaneously about the drive shaft axis when said drive shaft rotates, so that the drive from said drive shaft will be transmitted through said rollers to said friction ring and from the latter to said driven member.

If a variable transmission system using frictional drive surfaces, e.g. as known from US—A—2 836 994, is used in connection with an accessory drive, the problem exists that the frictional surfaces can stick together due to a fault such a seizing, and also that the position of a shifting ring may vary erroneously with the rotational speed of a transmission output member. In order to eliminate such disadvantages in an accessory drive, it is an object of the invention to provide an accessory drive device in an engine, in which in case of such a fault, the drive of the accessory unit can be continued without breaking down.

The inventive device for driving accessories is structured as defined in claim 1.

In such an accessory drive the orbit ring as the stationary element receives the rotational reaction, which is applied to the engine stationary member in the meshing direction of the one-way clutch. Consequently, there is no problem in normal operation. In case the frictional transmission surface sticks due to fault such as seizure, the rotational force of the input shaft reverses its direction due to the one-way clutch operation during the normal state, thereby the fixing of the stationary member to the support ring is released and the accessory drive pulley rotates integrally with the input shaft so as to maintain the function.

Brief Description of the Drawings

Fig. 1 is a side view of an accessory drive device of an engine according to the invention, partly cut away to reveal the inside thereof;

Fig. 2 is a sectional view taken along line II—II of Fig. 1;

Fig. 3 shows a planetary cone and a member contacting thereto in the drive device shown in Fig. 1 illustrating contacting point and relative dimension; and

Fig. 4 is a graph illustrating rotational speed of an accessory drive pulley versus rotational speed of an engine.

Detailed Description of the Preferred Embodiment

An embodiment of the invention will now be described referring to the accompanying drawings.

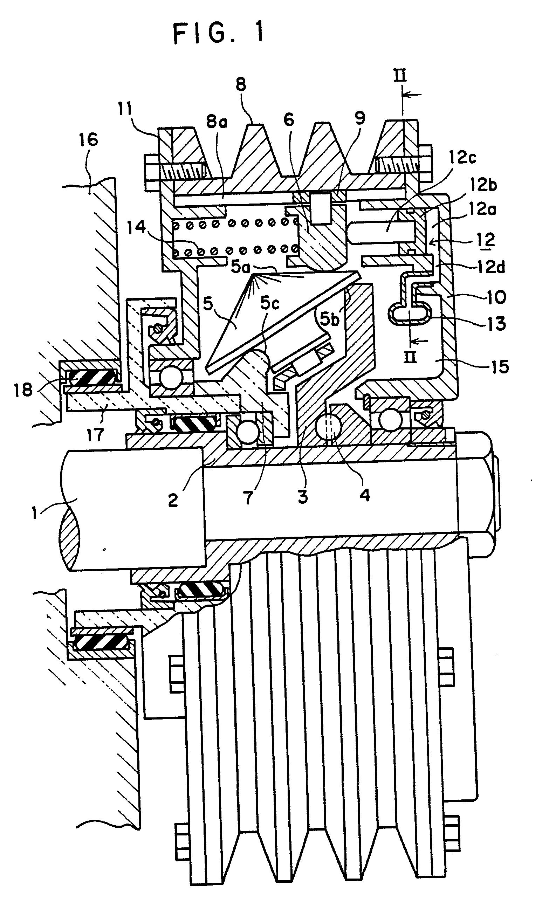

In Fig. 1, reference numeral 2 designates an input shaft directly coupled to an output shaft such as a crank shaft 1 of an engine, numeral 3 an input transmission member supported by the input shaft, and numeral 4 a cam device for generating pressure interposed between the input shaft 2 and the input transmission member 3. Numeral 5 designates a plurality of cone friction wheels or planetary cones, each composed of a frictional transmission surface 5a on a conical surface, a frictional transmission surface 5b on a bottom surface of cone, and a frictional transmission surface 5c on a circumferential surface of shaft leading to the bottom surface of the cone. Numeral 6 designates a shifting ring which is engaged in frictional engagement with the frictional transmission surface 5a of the planetary cone 5 and moved in the axial direction so as to vary the frictional transmission radius of the planetary cone 5.

Numeral 7 is a non-rotating orbit ring which is engaged in frictional engagement with the frictional transmission surface 5c of the circumferential surface of the shaft of the planetary cone 5 and guides rotation of the planetary cone 5 about the axial center of the input shaft 2, i.e., the revolution. The frictional transmission surface 5b of the bottom of the planetary cone 5 is engaged in frictional engagement with the outer circumferential edge of the input transmission member 3. The cam force of the cam device 4 acting to move the input transmission member 3 in the axial direction acts as the pressure in the normal direction of the frictional transmission surfaces 5a, 5b, 5c of the planetary cone 5, and its acting direction and amount are set so as to take balance as vector with the reaction applied to the shifting ring 6, the input transmission member 3 and the orbit ring 7, respectively. Numeral 8 designates an accessory drive pulley, numeral 8a a plurality of grooves on the inner circumferential surface of the pulley 8 in the axial direction, and numeral 9 a roller key engaged with the groove 8a for transmitting the rotational force of the shifting ring 6 to the pulley 8 and allowing the movement of the gear shifting ring 6 in the axial direction. Numerals 10, 11 designate side plates mounted on both ends of the pulley 8, and the pulley 8 is supported through the side plates 10, 11 and rotatable with respect to the input shaft 2.

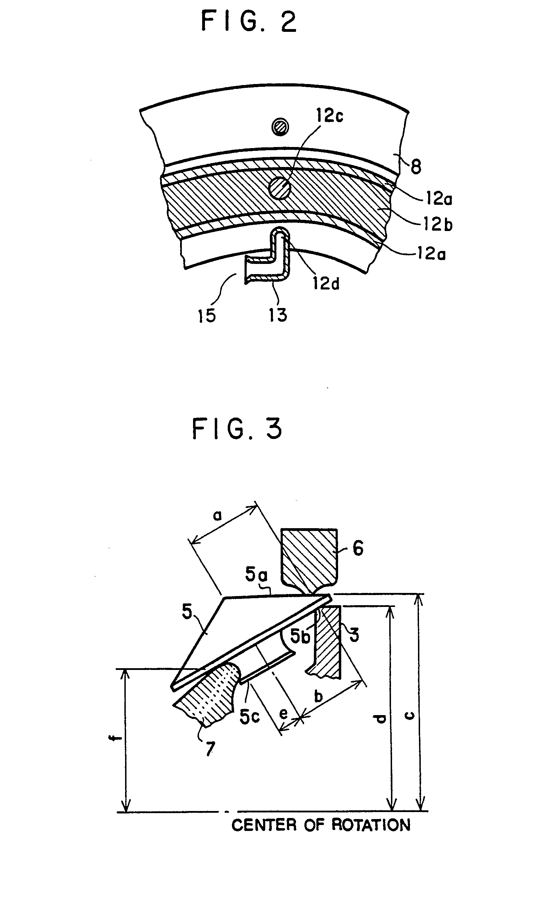

In the embodiment, a transmission actuator to move the shifting ring 6 in the axial direction comprises a hydraulic piston/cylinder assembly 12 constituted to push the shifting ring 6 in the axial direction. The piston/cylinder assembly 12 is provided with a cylinder 12a integral with the side plate 10, a ring-like piston 12b, a plurality of rods 12c fixed to the piston ring 12b and abutting on the shifting ring 6, and a flow path 12d to guide the acting hydraulic pressure. Numeral 13 designates a Pitot tube which communicates with the flow path 12d and has the other end opened forward in the rotational direction of the side plate 10 as shown in Fig. 2. Numeral 14 designates a return spring. The closed space surrounded by the pulley 8, the two side plates 10 and 11, the orbit ring 7 and the input shaft 2 is filled with a frictional transmission oil 15 as medium for the frictional transmission.

Numeral 16 designates a stationary member fixed to an engine (not shown), and a support ring 17 with a part of generally cylindrical shape is rotatably supported by the stationary member 16 and arranged in coaxial relation to the crank shaft 1, and the crank shaft 1 passes through the central hole of the support ring 17. The support ring 17 extends inward into the side plate 11, and is fixed to the orbit ring 7 at one end thereof. A one-way clutch 18 is installed between the stationary member 16 and the support ring 17, and allows the support ring 17 and the orbit ring 7 supported thereon to rotate with respect to the stationary member 16 only in the same direction as that of the crank shaft 1. Since specific structure of the one-way clutch 17 is well known in this technical field, the detailed description shall be omitted here.

Operation of the embodiment in the above constitution will be described. The driving force of the crank shaft 1 is transmitted through the cam device 4 to the input transmission member 3, thereby the planetary cone 5 rotates on its own axial center, and at the same time performs the revolution around the axial centre of the input shaft 2 along the frictional transmission surface 5c with the orbit ring 7 being the stationary element.

The shifting ring 6 engaged in frictional engagement with the frictional transmission surface 5a of the planetary cone 5 is rotated around the axis of the input shaft 2 at the speed determined on the basis of the differential action between the self-rotation and the revolution of the planetary cone 5 and the transmission radius ratio, and drives the pulley 8 through the roller key 9. The rotational speed ratio between the input shaft 2 and the shifting ring 6 can be arbitrarily set by moving the shifting ring 6 in the axial direction so that the effective radius ratio of the frictional transmission between the input shaft 2 and the shifting ring 6 becomes a prescribed value.

Fig. 3 illustrates effective radius a — f of each element of the transmission system in the drive device shown in Fig. 1. Assuming that rotational speed of the input shaft 2 be $N_1$ and rotational speed of the gear shifting ring 6 be $N_2$, it follows that

$$N_2/N_1 = \frac{d(ec + fa)}{c(ed + fb)}$$

If the value of $a$ is varied, $N_2/N_1$, i.e., ratio of the rotational speed of the pulley 8 to that of the input shaft 2, can be arbitrarily varied.

Effective radius a — f is as follows:

a: effective radius of the frictional transmission surface 5a of the planetary cone 5 to the shifting ring 6.

b: effective radius of the frictional transmission surface 5b of the planetary cone 5 to the input transmission member 3.

c: inner radius of the shifting ring 6.

d: effective radius of the input transmission member 3.

e: effective radius of the frictional transmission surface 5c of the planetary cone 5 to the orbit ring 7.

f: effective radius of the orbit ring 7.

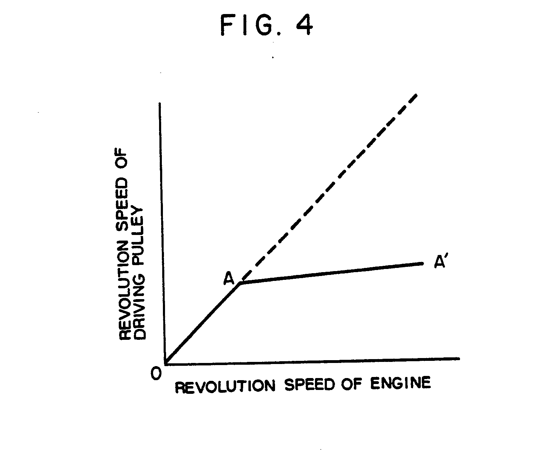

Position of the shifting ring 6 in the axial direction is controlled by the hydraulic piston cylinder assembly 12 as hereinafter described. Since the Pitot tube 13 rotates integrally with the side plate 10, the frictional transmission oil 15 is received at the opening of the Pitot tube 13 thereby pump action is effected to introduce the hydraulic pressure through the flow path 12d to the hydraulic piston cylinder assembly 12. The hydraulic pressure generated then has an amount proportional to square of the relative rotational speed between the Pitot tube 13 and the frictional transmission oil 15. On the other hand, since the rotational speed of the Pitot tube 13 is equal to that of the pulley 8, output of the hydraulic piston cylinder assembly 12 varies depending on the rotational speed of the pulley 8. For example, when the input of the hydraulic piston cylinder assembly 12 increases, the shifting ring 6 is pushed towards the cone vertex of the planetary cone 5. As a result, speed of the pulley 8 is reduced and the hydraulic pressure from the Pitot tube 13 is reduced and the output of the hydraulic piston cylinder assembly 12 is decreased by receiving the negative feedback. In the reverse operation, the positive feedback is added. Accordingly, since output of the hydrauliuc piston cylinder assembly 12 continuously controls the axial position of the shifting ring 6 in equilibrium to the reaction of the return spring 14, the rotational speed of the pulley 8 can be made approximately constant regardless of variation in the rotational speed of the input shaft 2. In Fig. 4 illustrating an example of the rotational speed control characteristics, abscissa represents the engine rotational speed and ordinate represents the accessory drive pulley rotational speed in the accessory drive device of the invention. In the region shown by line OA of Fig. 4, the rotational speed of the engine, i.e., the crank shaft 1 is low and also the rotational speed of the pulley 8 is low and output of the hydraulic cylinder 12 is low, thereby when the shifting ring 6 is pushed towards the cone basis of the planetary cone 5 by load of the return spring 14, the pulley 8 has the same rotational speed as that of the engine. In the region shown by line AA' of Fig. 4, the output of the hydraulic cylinder 12 is in equilibrium to the reaction of the return spring 14, and even if the engine rotational speed rises the rotational speed of the pulley 8 is controlled approximately constant. In addition, the pulley 8 may be constituted by other transmission output member such as a sprocket or a gear.

On the other hand, in case the frictional transmission surface sticks due to fault such as seizure, the rotational force of the input shaft 2 is directly transmitted to the pulley 8 at the same speed and the same rotational direction, and the orbit ring 7 and the support shaft 17 also receives the same rotational force as that of the input shaft 2. Since the rotational direction is the coupling release direction of the one-way clutch 18, the rotation is not constrained by the engine stationary member 16 but the operation can be continued without breaking any part of the device. In this case, the transmission function to the pulley 8 is no longer in operation, but since the pulley 8 has the same speed as the engine rotational speed, the basic function of the device can be maintained.

The one-way clutch 18 in the invention may be any type such as roller type, ball type or spray type, or otherwise may be combination of a gear and a ratchet.

According to the invention as above described, since the nonstage transmission with the differential planetary mechanism of frictional transmission type and the transmission actuator comprising the hydraulic piston cylinder assembly acting by the skimming action, hydraulic pressure of the Pitot tube acting in the frictional transmission oil of the transmission are constituted integrally in compact structure within the inner circumferential space of a usual crank pulley, the installation space is as wide as to enable the replacement for the usual crank pulley, the frictional transmission is not accompanied with noise during running, the mechanism of the transmission actuator is simple and can be made at low cost, and the rotational speed of the accessory drive pulley is controlled to be approximately constant from intermediate range of the engine rotational speed, thereby energy saving operation of the accessory improves the fuel cost of engine and the power performance. Moreover, since the stationary element of the differential planetary mechanism is connected through the one-way clutch to the engine stationary member, in case the frictional transmission surface of the transmission sticks due to fault such as seizure, the device does not break down but the basic function of the device can be maintained with safety.

**Claims**

1. An accessory driving device for driving, for instance, an alternator, a cooling water pump, an air-conditioning compressor, utilizing power taken from an output shaft (1) of an engine, said device comprising:

an input shaft (2) rotatably supported on a stationary member (16) and driven by said engine output shaft (1) and rotated at the same rotational speed; a transmission output member (8) rotatably supported on said input shaft (2) and transmitting the power to said accessory;

planetary cone members (5) rotatably mounted around said input shaft (2) and in self-rotation around an axis inclined with respect to the axis of the input shaft (2), each of said planetary cone members (5) having a first part with a surface of nearly conical shape coaxial to the inclined axis and with a bottom surface radial to the inclined axis, and a second part in the form of a shaft with a circumferential surface coaxial to the inclined axis and connected with the bottom surface of the first part, and first, second and third frictional transmission surfaces (5a, 5b, 5c) being formed on the conical surface of the first part, the bottom surface of the first part and the circumferential surface of the second part, respectively;

an input transmission member (3) installed on and rotatable with said input shaft (2) and being with its outer circular periphery in frictional engagement with the second frictional transmission surface (5b) of said planetary cone members (5);

a support ring (17) of nearly cylindrical shape with a center hole through which said input shaft (2) passes and being arranged in coaxial relation to said input shaft (2);

an orbit ring (7) fixedly supported to said support ring (17), said orbit ring (7) provided in the revolution path of said planetary cone members (5) and having an annular frictional engaging surface to be engaged in frictional engagement with the third frictional transmission surface (5c) of said planetary cone members (5);

a shifting ring (6) supported on said transmission output member (8) and movable only in the axial direction thereof and having a frictional engaging surface engaged in frictional engagement with the first frictional transmission surface (5a) of said planetary cone members (5) always within the movable region in the axial direction;

a transmission ratio varying member (12) varying the position of said shifting ring (6) in a direction to get near or away with respect to the rotation centers of said planetary cone members (5) in response to the rotational speed of said transmission output member (8) and suppressing the rise of the rotational speed of said transmission output member (8) in the range of the rotational speed of said input shaft (2) larger than a prescribed value; and

a one-way clutch installed between said stationary member (16) and said support ring (17) for allowing said support ring (17) to rotate only in the rotational direction of said output shaft (1).

2. A device as set forth in claim 1, wherein said transmission ratio varying member is a hydraulic piston/cylinder assembly (12) for varying the position of said shifting ring (6) corresponding to the rotational speed of said transmission output member (8).

3. A device as set forth in claim 2, wherein said input shaft (2), said transmission output member (8) and said orbit ring (7) constituted an annular closed room, and said planetary cone members (5), said input transmission member (3), said shifting ring (6), said hydraulic piston/cylinder assembly (12) and a pitot tube (13) are enclosed in said room, and the space between the various members being filled with a frictional transmission oil (15).

4. A device as set forth in claim 3, wherein the working fluid to supply said hydraulic cylinder (12) with hydraulic pressure by action of said pitot tube (13) is said frictional transmission oil (15).

5. A device as set forth in claim 1, wherein said shifting ring (6) is guided along a plurality of key grooves (8a) formed on an inner circumferential surface of said transmission output member (8) and is extending along the axial direction thereof.

6. A device as set forth in claim 1, wherein said transmission output member (8) is a pulley.

**Patentansprüche**

1. Hilfsantriebsvorrichtung zum Antreiben eines Hilfsaggregats, z.B. eines Wechselstromgenerators, einer Kühlwasserpumpe, und/oder eines Klimaanlagen-Kompressors, mittels Antriebsleistung von der Ausgangswelle (1) eines Motors; mit einer an einem stationären Teil (16) drehbar gelagerten Eingangswelle (2), die durch die Ausgangswelle (1) des Motors mit gleicher Drehzahl angetrieben wird; mit einem Getriebeausgangsteil (8), das drehbar auf der Eingangswelle (2) gelagert ist und Leistung an das Hilfsaggregat überträgt; mit Planetenkegelrädern (5), die drehbar um die Eingangswelle (2) und in Selbstdrehung um eine gegenüber der Achse der Eingangswelle (2) geneigten Achse angeordnet sind, wobei jedes der Planetenkegelräder (5) einen ersten Bereich mit einer etwa konischen Fläche koaxial zu der geneigten Achse und mit einer Bodenfläche radial zu der geneigten Achse, einen zweiten Bereich in der Form einer Welle mit einer zur geneigten Achse koaxialen Umfangsfläche, die mit der Bodenfläche des ersten Bereiches verbunden ist, sowie eine erste, eine zweite und eine dritte Reibungsübertragungsfläche (5a, 5b, 5c) auf der konischen Fläche des ersten Bereiches, auf der Bodenfläche des ersen Bereiches bzw. auf der Umfangsfläche des zweiten Bereiches aufweist; mit einem Eingangsgetriebeglied (3), das auf der Eingangswelle (2) drehbar gelagert ist und mit seinem äußeren Umfang reibungsschlüssig an der zweiten Reibungsübertragungsfläche (5b) der Planetenkegelräder (5) angreift; mit einem Stützring (17) mit etwa zylindrischer Form und einer Zentralbohrung, durch die die Eingangswelle (2) hindurchgeführt ist und die koaxial zur Eingangswelle (2) angeordnet ist; mit einem Orbitring (7), der an dem Stützring (17) befestigt und im Umlaufpfad der Planetenkegelräder (5) angeordnet ist, und der eine ringförmige Reibungsangriffsfläche hat, die reibungsschlüssig an der dritten Reibungsübertragungsfläche (5c) der Planetenkegelräder angreift;

mit einem Verstellring (6), der auf dem Getriebeausgangsteil (8) gelagert ist, nur in dessen Axialrichtung beweglich ist und eine Reibungsangriffsfläche hat, die reibungsschlüssig an der ersten Reibungsübertragungsfläche (5a) der Planetenkegelräder (5) innerhalb des axialen Bewegungsbereiches angreift;

mit einem Übersetzungsverhältnis-Verstellglied (12), das die Position des Versetellringes (6) in Richtung auf die Rotationszentren der Planetenkegelräder (5) und von diesen fort abhängig von der Drehzahl des Geriebeausgangsteils (8) verstellt und einem Anstieg der Drehzahl des Getriebeausgangsteils (8) entgegewirkt, wenn im Drehzahlbereich der Eingangswelle (2) eine vorbestimmter Wert überschritten wird; und

mit einer Einwegkupplung zwischen dem stationären Teil (16) und dem Stützring (17), die eine Rotation des Stützringes (17) nur in Richtung der Rotation der Ausgangswelle (1) zuläßt.

2. Vorrichtung nach Anspruch 1, dadurch gekennzeichnet, daß das Übersetzungsverhältnis-Verstellglied eine hydraulische Kolben/Zylindereinheit (12) ist, mit der die Position des Verstellringes (6) entsprechend der Drehzahl des Getriebeausgangssteils (8) verstellt wird.

3. Vorrichtung nach Anspruch 2, dadurch gekennzeichnet, daß die Eingangswelle (2), das Getriebeausgangsteil (8) und der Orbitring (7) einen geschlossenen Ringraum bilden, in dem die Planetenkegelräder (5), das Eingangsgetriebeglied (3), der Verstellring (6), die hydraulische Kolben/Zylindereinheit (12) und ein Pitotrotor (13) angeordnet sind, und

daß der Raum zwischen den einzelnen Teilen mit einem Reibungsgetriebeöl (15) gefüllt ist.

4. Vorrichtung nach Anspruch 3, dadurch gekennzeichnet, daß die Druckflüssigkeit für die Betätigung des Hydraulikzylinders (12) abhängig von dem Pitotrohr (13) das Reibungsgetriebeöl (15) ist.

5. Vorrichtung nach Anspruch 1, dadurch gekennzeichnet, daß der Verstellring (6) entlang einer Mehrzahl von Keilnuten (8a) in einer inneren Umfangsfläche des Getriebeausgangsteils (8) geführt ist und sich in dessen Axialrichtung erstreckt.

6. Vorrichtung nach Anspruch 1, dadurch gekennzeichnet, daß das Getriebeausgangsteil (8) eine Riemenscheibe ist.

## Revendications

1. Dispositif d'entraînement d'organe auxiliaire destiné à entraîner, par exemple, un alternateur, une pompe à eau de refroidissement, un compresseur de conditionnement d'air, en utilisant une énergie tirée d'un arbre secondaire (1) d'un moteur à combustion interne, ledit dispositif comportant:

— un arbre primaire (2) monté rotatif sur un élément fixe (16) et entraîné par ledit arbre secondaire (1) du moteur à combustion interne pour tourner à la même vitesse de rotation;

— un élément de transmission secondaire (8) monté rotatif sur ledit arbre primaire (2) et qui transmet l'énergie audit organe auxiliaire;

— des éléments formant cônes planétaires (5) montés rotatifs autour dudit arbre primaire (2) et en rotation sur eux-mêmes autour d'un axe incliné par rapport à l'axe de l'arbre primaire (2), chacun desdits éléments formant cônes planétaires (5) possédant une première partie qui présente une surface de forme à peu près conique, coaxiale avec l'axe incliné et une surface inférieure radiale par rapport à l'axe incliné, et une seconde partie sous la forme d'un arbre qui possède une surface circonférentielle coaxiale avec l'axe incliné et reliée à la surface inférieure de la première partie, des première, seconde et troisième surfaces de transmission à frottement (5a, 5b, 5c) étant respectivement définies sur la surface conique de la première partie, sur la surface inférieure de cette dernière et sur la surface circonférentielle de la seconde partie;

— un élément de transmission primaire (3) monté sur ledit arbre primaire (2) et apte à tourner conjointement avec celui-ci, tout en étant, par sa périphérie circulaire extérieure, en contact à frottement avec la second surface de transmission à frottement (5b) desdits éléments formant cônes planétaires (5);

— une bague d'appui (17) de forme à peu près cylindrique pourvue d'un trou central à travers lequel passe ledit arbre primaire (2), et disposée dans une relation coaxiale avec ledit arbre primaire (2);

— une couronne orbitale (7) montée fixe sur ladite bague d'appui (17), laquelle couronne orbitale (7) est prévue dans la trajectoire de révolution desdits éléments formant cônes planétaires (5) et présente une surface de contact à frottement annulaire destinée à être en contact à frottement avec la troisième surface de transmission à frottement (5c) desdits éléments formant cônes planétaires (5);

— un anneau de déplacement (6) monté sur ledit élément de transmission secondaire (8) en étant mobile uniquement dans la direction axiale de celui-ci, et qui présente une surface de contact à frottement en contact à frottement avec la première surface de transmission à frottement (5a) desdits éléments formant cônes planétaires (5), et ce, toujours dans les limites de la zone mobile dans la direction axiale;

— un élément variateur de rapport de transmission (12) qui fait varier la position dudit anneau de déplacement (6) dans une direction propre à le rapprocher ou à l'éloigner par rapport aux centres de rotation desdits éléments formant cônes planétaires (5), en réponse à la vitesse de rotation dudit élément de transmission secondaire (8), et qui supprime l'augmentation de la vitesse de rotation dudit élément de transmission secondaire (8) dans la plage de la vitesse de rotation dudit arbre primaire (2) supérieure à une valeur prescripte; et

— un embrayage à glissement installé entre ledit élément fixe (16) et ladite bague d'appui (17), pour permettre à cette dernière de tourner uniquement dans le sens de rotation dudit arbre secondaire (1).

2. Dispositif tel que défini dans la revendication 1, dans lequel ledit élément variateur de rapport de transmission est un ensemble de piston/cylindre hydraulique (12) destiné à faire varier la position dudit anneau de déplacement (6) en fonction de la vitesse de rotation dudit élément de transmission secondaire (8).

3. Dispositif tel que défini dans la revendication 2, dans lequel ledit arbre primaire (2), ledit élément de transmission secondaire (8) et ladite couronne orbitale (7) forment une chambre annulaire fermée, chambre dans laquelle sont enfermés lesdits éléments formant cônes annulaires (5), ledit élément de transmission primaire (3), ledit anneau de déplacement (6), ledit ensemble de piston/cylindre hydraulique (12) et un tube de Pitot, l'espace qui sépare les différents éléments étant rempli par une huile de transmission à frottement (15).

4. Dispositif tel que défini dans la revendication 3, dans lequel le fluide de travail destiné à fournir audit cylindre hydraulique (12) une pression hydraulique sous l'action dudit tube de Pitot (13) est ladite huile de transmission à frottement (15).

5. Dispositif tel que défini dans la revendication 1, dans lequel ledit anneau de déplacement (16) est guidé le long d'une série de rainures à clavette (8a) définies sur une surface circonférentielle intérieure dudit élément de transmission secondaire (8) et s'étend le long de la direction axiale de celui-ci.

6. Dispositif tel que défini dans la revendication 1, dans lequel ledit élément de transmission secondaire (8) est une poulie.

EP 0 184 709 B1

FIG. 1

EP 0 184 709 B1

# FIG. 2

# FIG. 3

CENTER OF ROTATION

2

# FIG. 4

REVOLUTION SPEED OF ENGINE

REVOLUTION SPEED OF
DRIVING PULLEY